# EUROPÄISCHE PATENTSCHRIFT

(11) **EP 2 755 769 B1**
(45) Veröffentlichungstag und Bekanntmachung des Hinweises auf die Patenterteilung: **27.06.2018**
(21) Anmeldenummer: 13720745.2
(22) Anmeldetag: 02.04.2013
(51) Int. Cl.: B05B 1/34, B05B 7/04, B29B 7/74, B27G 11/00, B01F 7/00, B01F 5/06, B01F 15/00, B01F 3/12, B29B 7/40, B29B 7/76, B29B 7/80

(54) **VORRICHTUNG ZUM MISCHEN**
DEVICE FOR MIXING
DISPOSITIF DE MÉLANGEAGE

(30) Priorität: 05.04.2012 AT 4092012; 02.05.2012 AT 5222012
(43) Veröffentlichungstag der Anmeldung: 23.07.2014
(73) Patentinhaber: LISEC Austria GmbH, 3353 Seitenstetten (AT)
(72) Erfinder: MADER, Leopold, A-3364 Neuhofen/Ybbs (AT)
(74) Vertreter: Beer & Partner Patentanwälte KG
(86) Internationale Anmeldenummer: PCT/AT2013/000053
(87) Internationale Veröffentlichungsnummer: WO 2013/149273

(56) Entgegenhaltungen:
- CA-A1- 2 304 668
- DE-U1-202008 014 823
- US-A- 2 969 960
- US-A- 3 545 680
- US-A- 3 741 441
- US-A- 6 105 822

## Beschreibung

Die Erfindung betrifft eine Vorrichtung mit den Merkmalen des einleitenden Teils von Anspruch 1 (US 2,969,960 A).

Insbesondere, wenn miteinander chemisch reagierende Komponenten, insbesondere Basismaterial und Härtermaterial von Klebern, im richtigen Mengenverhältnis gemischt werden sollen, werden, insbesondere dynamische, Mischvorrichtungen, verwendet.

Aus der US 2,969,960 A ist eine Vorrichtung zum Mischen von wenigstens zwei Stoffen, mit einem Gehäuse mit wenigstens zwei Öffnungen für das Aufgeben der Stoffe und mit einer Austrittsöffnung und mit einem im Gehäuse drehbar aufgenommenen Mischelement, wobei das Mischelement in Richtung seiner Achse gegenüber dem Gehäuse zum Einstellen der Größe eines Spaltes zwischen Mischelement und Gehäuse verstellbar ist, bekannt.

Aus der US 3,102,716 A ist eine Mischvorrichtung mit einem Gehäuse und einem in diesem drehbar aufgenommenen Mischelement bekannt. Das Gehäuse trägt innen eine schraubenlinienförmige Rippe. Das Mischelement trägt außen eine ebenfalls schraubenlinienförmige Rippe. Zwischen den Rippen, die nicht ineinandergreifen, liegt Spiel vor, das im konischen Bereich durch axiales Verstellen des Mischelementes vergrößert und verkleinert werden kann. Die Austrittsöffnung der Mischvorrichtung von US 3,102,716 A kann durch ein schieberartiges Verschlussorgan geschlossen werden.

Der Erfindung liegt die Aufgabe zugrunde, Mischvorrichtungen, in welchen sich ein Mischelement in einem Gehäuse dreht, und dabei die Substanzen mischt, vorzuschlagen, die ein gründliches und homogenes Mischen der Komponenten bei genauer Dosierung ermöglicht.

Gelöst wird diese Aufgabe erfindungsgemäß mit einer Vorrichtung, welche die Merkmale von Anspruch 1 aufweist.

Bevorzugte und vorteilhafte Ausgestaltungen der Erfindung sind Gegenstand der Unteransprüche.

Da bei der erfindungsgemäßen Vorrichtung das rotierende Mischelement im Gehäuse der Vorrichtung in Richtung seiner Achse verstellbar ist, kann der Spalt zwischen der Innenfläche des Gehäuses und der Außenfläche des Mischelementes in seiner Größe verändert werden. Dies erlaubt es das für das Mischen erforderliche Schergefälle einzustellen. Überdies wirkt die Vorrichtung der Erfindung als Proportionalventil, so dass die aus der Austrittsöffnung aus der Vorrichtung austretende Menge an Gemisch eingestellt werden kann.

Die den erwähnten Spalt begrenzenden, einander zugewendeten Flächen von Mischelement und Gehäuse können eben oder sich zur Austrittsöffnung hin konisch verjüngend ausgebildet sein.

Da bei der erfindungsgemäßen Vorrichtung das rotierende Mischelement im Gehäuse axial verstellbar ist, ist unter anderem eine proportionale Mengen- und Druckregelung möglich. Dadurch, dass das rotierende Mischelement unter Drehen desselben in Richtung auf die Austrittsöffnung vorgeschoben werden kann, bis der Spalt zwischen Mischelement und Gehäuse im Wesentlichen geschlossen ist, ist der Bereich der Regelung groß. Dies insbesondere, weil abgabeseitig ein Bereich vorgesehen ist, in dem der Innenraum des Gehäuses und das rotierende Mischelement sich konisch verjüngend ausgebildet sind.

Bei der Erfindung ergibt sich wegen der Möglichkeit, den Spalt, ganz gleich, ob dieser eben oder kegelförmig ist, in seiner Größe zu ändern, ein einstellbares, aber konstantes Schergefälle.

Da bei einer erfindungsgemäßen Mischvorrichtung in einer Ausführungsform im Aufgabenbereich der Komponenten ineinander greifende, ringförmige Rippen vorgesehen sind, werden die, gegebenfalls unter Vordruck, der Mischvorrichtung aufgegebenen, wenigstens zwei, Komponenten für den Mischvorgang aufbereitet. Dies auch, weil in dem Bereich der Rippen ein Unterteilen der Ströme der Komponenten eintritt.

In einer anderen Ausführungsform der erfindungsgemäßen Vorrichtung ergibt sich wegen wenigstens einer Rille oder Nut oder wegen wenigstens einer Rippe im abgabeseitigen Bereich des rotierenden Mischelementes die Möglichkeit einer Reinigung, indem das rotierende Mischelement unter Drehen desselben in Richtung auf die Austrittsöffnung vorgeschoben wird, bis der Spalt zwischen Mischelement und Gehäuse im Wesentlichen (auf "Null") geschlossen ist (also nicht mehr vorliegt). Dabei werden innen am Gehäuse und außen am Mischelement anhaftende Reste an unter Umständen ausgehärteter Mischung durch "Abschaben" entfernt. So kann die erfindungsgemäße Vorrichtung über längere Zeiten, ohne dass besondere Reinigungsmaßnahmen nach Zerlegen der Vorrichtung erforderlich sind, benützt werden.

Weitere Einzelheiten und Merkmale sowie Vorteile der Erfindung ergeben sich aus der nachstehenden Beschreibung bevorzugter Ausführungsbeispiele anhand der Zeichnung, in der Mischvorrichtungen im Schnitt dargestellt sind.

Es zeigt
- Fig. 1: ein erste Ausführungsform einer Mischvorrichtung,
- Fig. 2: eine zweite Ausführungsform einer Mischvorrichtung und
- Fig. 3: eine dritte Ausführungsform einer Mischvorrichtung.

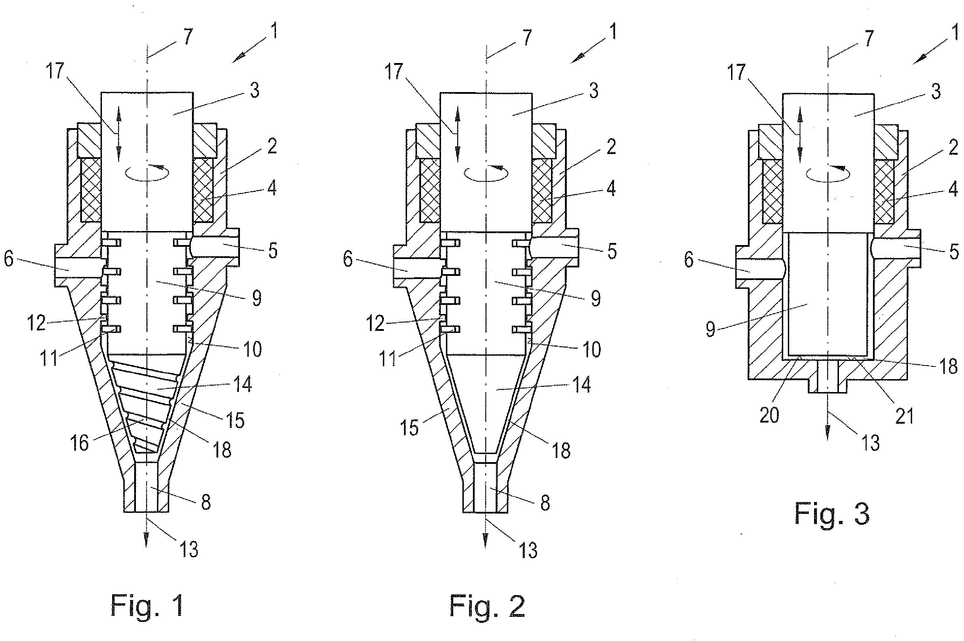

Die in den Zeichnungen in Fig. 1 gezeigte Vorrichtung 1 ist als dynamische Mischvorrichtung ausgebildet und besteht aus einem Gehäuse 2 und einem in den Gehäuse 2 drehend aufgenommenen Mischelement 3. Damit das Mischelement 3 im Gehäuse 2 gedreht werden kann, ist es mit einem nicht gezeigten Antrieb gekuppelt. Das Mischelement 3 ist gegenüber dem Gehäuse 2 durch eine stopfbüchsenartige Dichtung 4 abgedichtet.

In dem Gehäuse 2 ist eine Öffnung 5 für das Zuführen einer Komponente, insbesondere Basismaterial eines Klebers, und dieser Öffnung 5 gegenüberliegend eine Öffnung 6 für das Zuführen einer zweiten Komponente, z.B. Härtermaterial für einen aushärtenden Kleber, vorgesehen. Die Öffnungen 5 und 6 sind in Richtung der Achse 7 der Vorrichtung 1 zueinander versetzt angeordnet. Insbesondere wenn die Komponenten (Basismaterial/ Härtermaterial) eines zwei-Komponenten-Klebers gemischt werden sollen, ist die Öffnung 6 für das Klebermaterial der Austrittsöffnung 8 näher angeordnet als die Öffnung 5 für das Basismaterial.

Die Komponenten werden während sie von den Öffnungen 5,6 zur Austrittsöffnung 8 der Vorrichtung 1 wandern in dem gewünschten Mengenverhältnis der Komponenten, die der Vorrichtung 1 aufgegeben worden sind, gründlich gemischt.

Das rotierende Mischelement 3 besitzt im Bereich der Zuführöffnungen 5,6 für die Komponenten einen zylindrischen Bereich 9, in dem vom Mischelement 3 nach außen in Richtung zur Innenfläche 10 des Gehäuses 2 hin abstehende Ringrippen 11 vorgesehen sind. Die Ringrippen 11 können - wie gezeigt - in Nuten des Mischelementes 3 eingesetzte Ringe sein. Zwischen den vom Mischelement 3 abstehenden Ringrippen 11 sind von der Innenfläche 10 des Gehäuses 2 nach innen abstehende ringförmige Rippen 12 vorgesehen. Durch das Zusammenwirken von Ringrippen 11 und Rippen 12 ergibt sich ein Zerkleinern (Zerhacken) der zugeführten Komponenten, die so für das Mischen derselben aufbereitet werden. Dieser für das Mischen vorteilhafte Effekt kann noch verstärkt werden, indem die Ringrippen 11 außen und/oder die Rippen 12 innen mit beliebiger Zahnform und Form der Zahnzwischenräume gezahnt sind. Diese Ringrippen 11 und die Rippen 12 sind zwar vorteilhaft, müssen aber nicht vorgesehen sein.

Bezogen auf die Förderrichtung (Pfeil 13) nach dem zylindrischen Bereich 9 des Mischelementes 3 besitzt dieses einen konischen Teil 14, der in einem sich zur Austrittsöffnung 8 ebenfalls konisch verjüngenden Teil 15 des Gehäuses 2 aufgenommen ist. In dem konischen Teil 14 sind Nuten 16 oder vorstehende Rippen vorgesehen, beispielsweise mehrere ringförmige Nuten 16 (oder Rippen), die zur Achse schräg gestellt sind, oder eine schraubenlinienförmige Nut (oder Rippe). So kann die Innenfläche 10 des Gehäuses 2 im konischen Bereich 15 gereinigt werden, wozu das rotierende Mischelement 7 in Richtung auf die Austrittsöffnung 8 hin unter ständigem Verkleinern des Spaltes 18 (bis auf "Null") zwischen der Außenfläche des konischen Teiles 14 des Mischelementes 3 und der Innenfläche des konischen Bereiches 15 des Gehäuses 2 vorgeschoben wird, damit der konische Bereich 14 an der Innenfläche 10 des Gehäuses 2 reibt und diese reinigt.

Die in Fig. 2 gezeigte Ausführungsform der erfindungsgemäßen Mischvorrichtung 1 entspricht der anhand von Fig. 1 beschriebenen Ausführungsform. Die Mischvorrichtung 1 von Fig. 2 hat aber ein Mischelement 3, dessen konischer Teil 14 ohne Nut oder Rippe ausgeführt ist, also im wesentlichen glatt ist.

Bei der in Fig. 3 gezeigten Mischvorrichtung 1 endet das Mischelement 3 mit einer ebenen (kreisrunden) Stirnfläche 20, die der Austrittsöffnung 8 zugewandt ist. Die Stirnfläche 20 begrenzt zusammen mit der die Austrittsöffnung 8 umgebenden Ringfläche 21 den ebenen Spalt 18, dessen Weite durch Verstellen des Mischelementes 3 in axialer Richtung (Pfeil 17) eingestellt werden kann.

Wenngleich im zylindrischen Bereich 9 des Mischelementes 3 bei der in Fig. 3 gezeigten Ausführungsform weder Ringrippen 11 noch Rippen 12 vorgesehen sind, können solche Ringrippen 11 und Rippen 12, so wie bei den Ausführungsformen der Fig. 1 und 2, vorgesehen sein.

Bei der in Fig. 3 gezeigten Ausführungsform einer Mischvorrichtung 1 ist die Stirnfläche 20 des Mischelementes 3 glatt. Es ist aber in Betracht gezogen, an der Stirnfläche 20 rippenartige Vorsprünge oder in der Stirnfläche 20 Nuten oder Rillen vorzusehen, um die oben erwähnte Reinigungswirkung erzielen zu können.

Der erfindungsgemäßen Vorrichtung 1 werden die Komponenten, im Beispiel Basismaterial und Härtermaterial, unter Vordruck aufgegeben, so dass sie durch die Vorrichtung 1 gefördert werden.

Die axiale Verstellbarkeit des Mischelementes 3 gegenüber dem Gehäuse 2 (in axialer Richtung) dient auch dazu, die Menge des aus der Austrittsöffnung 8 austretenden gemischten Materials nach Art eines Proportionalventils zu dosieren.

Die erfindungsgemäße Vorrichtung hat in den in den Zeichnungsfiguren 1 bis 3 gezeigten Ausführungsformen den Vorteil, dass sie ein konstantes Schergefälle über den Förderweg der Komponenten von den Aufgabeöffnung 5,6 zur Austrittsöffnung 8 gewährleistet. Dieses Schergefälle kann durch Verstellen des Mischelementes 3 relativ zum Gehäuse 2 und damit durch Ändern des Spaltes 18 auf den für den jeweiligen Mischvorgang und die Eigenschaften der zu mischenden Komponenten jeweils besten Wert eingestellt werden.

Zusätzlich ist durch die axiale Verstellbarkeit des rotierenden Mischelementes 3 eine proportionale Mengen- und Druckregelung möglich.

Schließlich ist es möglich, die erfindungsgemäße Vorrichtung 1 durch axiales Verstellen des rotierenden Mischelementes 3 derart, dass dessen konischen Bereich 14 an der Innenfläche 10 im konischen Teil 15 des Gehäuses 2 der Vorrichtung 1 anliegt, zu reinigen.

Zusammenfassend kann ein Ausführungsbeispiel der Erfindung wie folgt beschrieben werden:
Eine Vorrichtung zum Mischen von wenigstens zwei flüssigen bis pastösen Stoffen besitzt ein Gehäuse 2 mit wenigstens zwei Öffnungen 5, 6 für das Aufgeben der Stoffe und mit einer Austrittsöffnung 8, ein im Gehäuse 2 drehbares Mischelement 3, das in Richtung 17 seiner Achse 7 gegenüber dem Gehäuse 2 zum Einstellen der Größe eines Spaltes 18 zwischen einem sich konisch verjüngenden Teil 14 des Mischelementes 3 und einem sich ebenfalls verjüngenden Bereich 15 des Gehäuses 2 verstellbar ist, um das Schergefälle im Bereich des Spaltes 18 einzustellen. Das Mischelement 3 weist einen Bereich 9 auf, in dem vom Mischelement 3 abstehende Ringrippen 11 vorgesehen sind, die zwischen benachbarte, von der Innenfläche 10 des Gehäuses 2 abstehende ringförmige Rippen 12, eingreifen.

## Patentansprüche

1. Vorrichtung zum Mischen von wenigstens zwei Stoffen, insbesondere flüssigen bis pastösen Stoffen, mit einem Gehäuse (2) mit wenigstens zwei Öffnungen (5, 6) für das Aufgeben der Stoffe und mit einer Austrittsöffnung (8) und mit einem im Gehäuse (2) drehbar aufgenommenen Mischelement (3), das in Richtung (Pfeil 17) seiner Achse (7) gegenüber dem Gehäuse (2) zum Einstellen der Größe eines im Bereich vor der Austrittsöffnung (8) vorgesehenen Spaltes (18) zwischen Mischelement (3) und Gehäuse (2) verstellbar ist, wobei der Spalt (18) zwischen einem konischen Teil (14) des Mischelementes (3) und einem konischen Bereich (15) des Gehäuses (2) vorgesehen ist und wobei sich der konische Teil (14) und der konische Bereich (15) in Richtung auf die Austrittsöffnung (18) hin verjüngen, **dadurch gekennzeichnet, dass** das Mischelement (3) einen zylindrischen Bereich (9) aufweist, dass im zylindrischen Bereich (9) vom Mischelement (3) abstehende Ringrippen (11) vorgesehen sind und dass von der Innenfläche (10) des Gehäuses (2) ringförmige Rippen (12) abstehen, die zwischen benachbarte Ringrippen (11) eingreifen, und dass das rotierende Mischelement (3) unter Drehen desselben in Richtung auf die Austrittsöffnung (8) vorschiebbar ist, bis der Spalt (18) zwischen Mischelement (3) und Gehäuse (2) im Wesentlichen geschlossen ist.

2. Vorrichtung nach Anspruch 1, **dadurch gekennzeichnet, dass** die Öffnungen (5, 6) für das Aufgeben der Stoffe in Richtung der Achse (7) der Vorrichtung (1) zueinander versetzt angeordnet sind.

3. Vorrichtung nach Anspruch 1 oder 2, **dadurch gekennzeichnet, dass** die Ringrippen (11) in Nuten im Mischelement (3) eingesetzte Ringe sind.

4. Vorrichtung nach einem der Ansprüche 1 bis 3, **dadurch gekennzeichnet, dass** die freien Ringflächen der Ringe (11) und/oder der Rippen (12) gezahnt sind.

5. Vorrichtung nach einem der Ansprüche 1 bis 4, **dadurch gekennzeichnet, dass** die ringförmigen Rippen (12) mit der Wand des Gehäuses (2) einteilig ausgebildet sind.

6. Vorrichtung nach einem der Ansprüche 1 bis 5, **dadurch gekennzeichnet, dass** in dem sich konisch verjüngenden Bereich (14) des Mischelementes (3) wenigstens eine zur Innenfläche (10) des Gehäuses (2) hin offene Nut (16) oder wenigstens eine vorstehende Rippe vorgesehen ist.

7. Vorrichtung nach einem der Ansprüche 1 bis 6, **dadurch gekennzeichnet, dass** der sich konisch verjüngende Bereich (14) bezogen auf die Bewegungsrichtung (Pfeil 13) der Stoffe durch die Vorrichtung (1) des Mischelementes (3) nach dem zylindrischen, ggf. mit Ringrippen (11) versehenen, Bereich (9) des Mischelementes (3) vorgesehen ist und dass die Innenfläche (10) des Gehäuses (2) in diesem Bereich (14) ebenfalls einen sich verjüngend ausgebildeten Bereich (15) aufweist.

8. Vorrichtung nach einem der Ansprüche 1 bis 7, **dadurch gekennzeichnet, dass** die Nut (16) oder die Rippen schraubenlinienförmig gekrümmt ist/sind.

9. Vorrichtung nach einem der Ansprüche 1 bis 8, **dadurch gekennzeichnet, dass** die Öffnungen (5, 6) für das Aufgeben der Stoffe in dem Bereich des Gehäuses (2) angeordnet sind, in dem das Mischelement (3) Ringrippen (11) aufweist.

## Claims

1. Device for mixing at least two substances, in particular liquid to pasty substances, having a housing (2) with at least two openings (5, 6) for feeding the substances and with an outlet opening (8) and with a mixing element (3) rotatably received in the housing (2), which is adjustable in the direction (arrow 17) of its axis (7) relative to the housing (2) for adjusting the size of a gap (18) provided in the region in front of the outlet opening (8) between the mixing element (3) and the housing (2), wherein the gap (18) is provided between a conical part (14) of the mixing element (3) and a conical region (15) of the housing (2), and wherein the conical part (14) and the conical region (15) taper in the direction of the outlet opening (18), **characterized in that** the mixing element (3) has a cylindrical region (9), that in the cylindrical region (9) annular ribs (11) protruding from the mixing element (3) are provided, and that annular ribs (12) which engage between adjacent annular ribs (11) protrude from the inner surface (10) of the housing (2), and that the rotating mixing element (3) can be advanced under rotation thereof in the direction of the outlet opening (8) until the gap (18) between the mixing element (3) and housing (2) is substantially closed.

2. Device according to claim 1, **characterized in that** the openings (5, 6) for the feeding of the substances in the direction of the axis (7) of the device (1) are arranged offset from each other.

3. Device according to claim 1 or 2, **characterized in that** the annular ribs (11) are rings inserted into grooves in the mixing element (3).

4. Device according to one of the claims 1 to 3, **characterized in that** the free annular surfaces of the rings (11) and/or the ribs (12) are toothed.

5. Device according to one of the claims 1 to 4, **characterized in that** the annular ribs (12) are integrally formed with the wall of the housing (2).

6. Device according to one of the claims 1 to 5, **characterized in that** in the conically tapering region (14) of the mixing element (3) at least one groove (16) which is open towards the inner surface (10) of the housing (2) or at least one protruding rib is provided.

7. Device according to one of the claims 1 to 6, **characterized in that** the conically tapering region (14), with respect to the direction of movement (arrow 13) of the substances through the device (1) of the mixing element (3), is provided after the cylindrical region (9), which is optionally provided with annular ribs (11), of the mixing element (3), and that the inner surface (10) of the housing (2) in this region (14) also has a region (15) formed in a tapering manner.

8. Device according to one of the claims 1 to 7, **characterized in that** the groove (16) or the ribs is/are helically curved.

9. Device according to one of the claims 1 to 8, **characterized in that** the openings (5, 6) for the feeding of the substances are arranged in the region of the housing (2) in which the mixing element (3) has annular ribs (11).

## Revendications

1. Dispositif pour mélanger au moins deux matières, en particulier des matières liquides à pâteuses, avec un boîtier (2) muni d'au moins deux ouvertures (5, 6) pour l'introduction des matières et d'une ouverture de sortie (8) et avec un élément mélangeur (3) disposé avec possibilité de rotation dans le boîtier (2), qui peut être ajusté en direction (flèche 17) de son axe (7) par rapport au boîtier (2) pour régler la taille d'un interstice (18) prévu devant l'ouverture de sortie (8) entre l'élément mélangeur (3) et le boîtier (2), l'interstice (18) étant prévu entre une partie conique (14) de l'élément mélangeur (3) et une zone conique (15) du boîtier (2) et la partie conique (14) et la zone conique (15) se resserrant en direction de l'ouverture de sortie (18), **caractérisé en ce que** l'élément mélangeur (3) présente une zone cylindrique (9), **en ce que** des nervures annulaires (11) dépassant de l'élément mélangeur (3) sont prévues dans la zone cylindrique (9) et **en ce que** des nervures en forme d'anneau (12) dépassent de la face intérieure (10) du boîtier (2) et se mettent en prise entre des nervures annulaires (11) voisines, et **en ce que** l'élément mélangeur (3) en rotation peut être avancé en tournant en direction de l'ouverture de sortie (8) jusqu'à ce que l'interstice (18) entre l'élément mélangeur (3) et le boîtier (2) soit sensiblement fermé.

2. Dispositif selon la revendication 1, **caractérisé en ce que** les ouvertures (5, 6) pour l'introduction des matières sont décalées l'une par rapport à l'autre en direction de l'axe (7) du dispositif (1).

3. Dispositif selon la revendication 1 ou 2, **caractérisé en ce que** les nervures annulaires (11) sont des anneaux insérés dans des rainures de l'élément mélangeur (3).

4. Dispositif selon l'une des revendications 1 à 3, **caractérisé en ce que** les surfaces annulaires libres des anneaux (11) et/ou des nervures (12) sont dentées.

5. Dispositif selon l'une des revendications 1 à 4, **caractérisé en ce que** les nervures en forme d'anneau (12) sont formées d'un seul tenant avec la paroi du boîtier (2).

6. Dispositif selon l'une des revendications 1 à 5, **caractérisé en ce qu'**au moins une rainure (16) ouverte vers la surface intérieure (10) du boîtier (2) ou au moins une nervure en saillie est prévue dans la zone resserrée en cône (14) de l'élément mélangeur (3).

7. Dispositif selon l'une des revendications 1 à 6, **caractérisé en ce que** la zone resserrée en cône (14) est prévue, par rapport au sens de déplacement (flèche 13) des matières à travers le dispositif (1) de l'élément mélangeur (3), en aval de la zone cylindrique (9), éventuellement munie de nervures annulaires (11), de l'élément mélangeur (3) et **en ce que** la face intérieure (10) du boîtier (2) présente également dans cette zone (14) une zone se resserrant en cône (15).

8. Dispositif selon l'une des revendications 1 à 7, **caractérisé en ce que** la rainure (16) ou les nervures sont incurvées en hélice.

9. Dispositif selon l'une des revendications 1 à 8, **caractérisé en ce que** les ouvertures (5, 6) pour l'introduction des matières sont disposées dans la zone du boîtier (2) dans laquelle l'élément mélangeur (3) présente des nervures annulaires (11).
